# EUROPEAN PATENT APPLICATION

(11) **EP 0 880 882 A1**
(43) Date of publication of application: **02.12.1998**
(21) Application number: 98109659.7
(22) Date of filing: 27.05.1998
(51) Int. Cl.: A01D 34/73

(54) **Feed-out mechanism for rotary mower cutting head**

(30) Priority: 30.05.1997 IL 12095897
(71) Applicant: Ner-Gaon, Shimon, Bat Yam (IL)
(72) Inventor: Ner-Gaon, Shimon, Bat Yam (IL)
(74) Representative: Modiano, Guido, Dr.-Ing.

(57) **Abstract**

A rotary mower cutting head which comprises a housing (1) in which is mounted a spool (2) on which is wound at least one flail, the spool also acting as cover for the housing, the spool having an inner space adapted to accommodate a release mechanism which comprises a ring shaped member (7). The cutting head is further provided a helical spring (18) placed intermediate the housing and a central shaft (12) of a non-round cross section which is connected to the releasing mechanism, characterized thereby that all parts are connected by a screw bolt (19) provided with a "head" of non round cross section and having a bore adapted to receive therein a protrusion (5) extending from the inner side of the cover part.

## Description

### Field and Background of the Invention

The present invention relates to rotary mower cutting heads with flexible cutting flails and more particularly to improvements in the mechanism which releases the cutting blades out of the housing, and even more particularly to the central connecting screw bolt.

The use of rotary cutting heads has become very popular amongst professionals and domestic users, due to various reasons such as, light weight, easy to handle, small size, etc.

There are a fairly large number of such cutters and trimmers and patents which relate to improvements in these devices, such as:

| **U.S. Patents:** | | | | |
|---|---|---|---|---|
| 5020223, | 4959904, | 4167812, | 4151646, | 4419822, |
| 4189833, | 4236309, | 4412382, | 4458419, | 4183138, |
| 4168572, | 4145809, | 4942662, | and | 4161820. |

As the present invention relates to the feedout mechanism of the cutting blades, which are in a form of flexible cord like flails, reference should be made to U.S. Patent Nos. 4,203,212 and 4,259,782.

All above mentioned patents are operated in the same manner, namely the use of flails and the step wise release of same. These patents relate to different parts and improvements in such mowers, therefore all of these mowers have a sort of bump or bulge which is adapted to engage the ground while working, in order to release the predetermined length of flail. Most of the mowers have a spool on which the flails are wound and which is mounted within the housing of the mower's head. When the cutting head is bumped against the ground, said spool makes a quarter turn and release that length of flail. The main driving shaft of the mower is connected to the spool, while the rest of the housing is stationary. A spring which applies pressure on the bumper is mounted also within the housing. Said driving shaft is connected to engine or electrical motor by means of a rigid or flexible shaft.

A new mechanism is described in my U.S. Patent No. 5.623.765, the present application refers to an improvement thereof.

### Objects of the Invention

The main object of the present invention to change the construction of the cutter's release mechanism providing an improved central connecting screw bolt.

### Summary of the Invention

According to the invention, there is provided a rotary mower's cutting head which comprises, a housing in which is mounted a spool on which is wound a flail, said spool is also a cover for said housing, said spool having an inner space adapted to accommodate the release mechanism being a ring shaped member, there is further provided a helical spring and a central shaft of a non-round cross section which is connected to the releasing mechanism, characterized thereby that all parts are connected by a screw bolt provided with a "head" of non round cross section and having a bore adapted to receive therein a protrusion extending from the inner side of said cover part.

### Short Description of the Drawings

The invention will now be described with reference to the attached drawings in which:
**Figure 1** is a sectional view of the cutting head according to the invention,
**Figure 2** is an exploded view thereof,

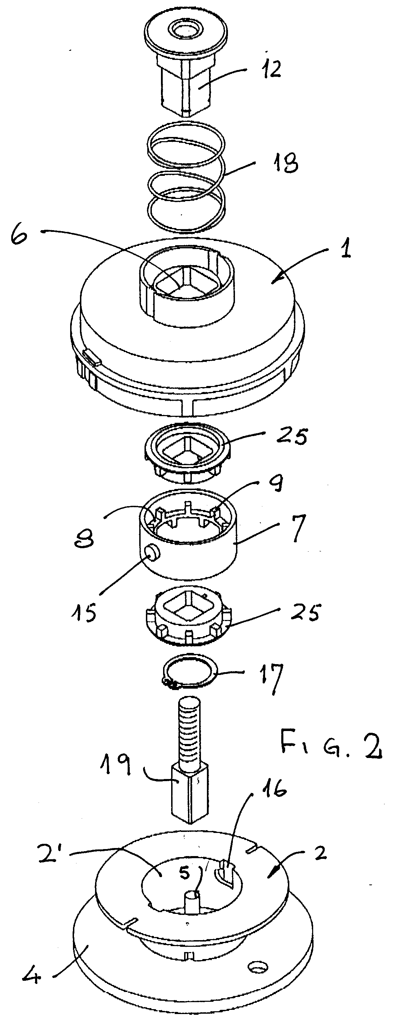

**Figure 3** is a perspective view of the inner part and the central screw bolt.

### Detailed Description of the Invention

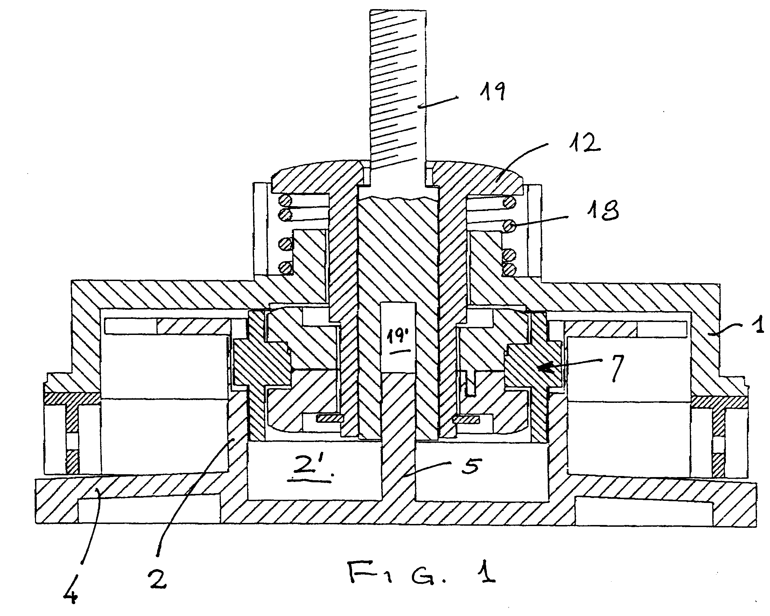

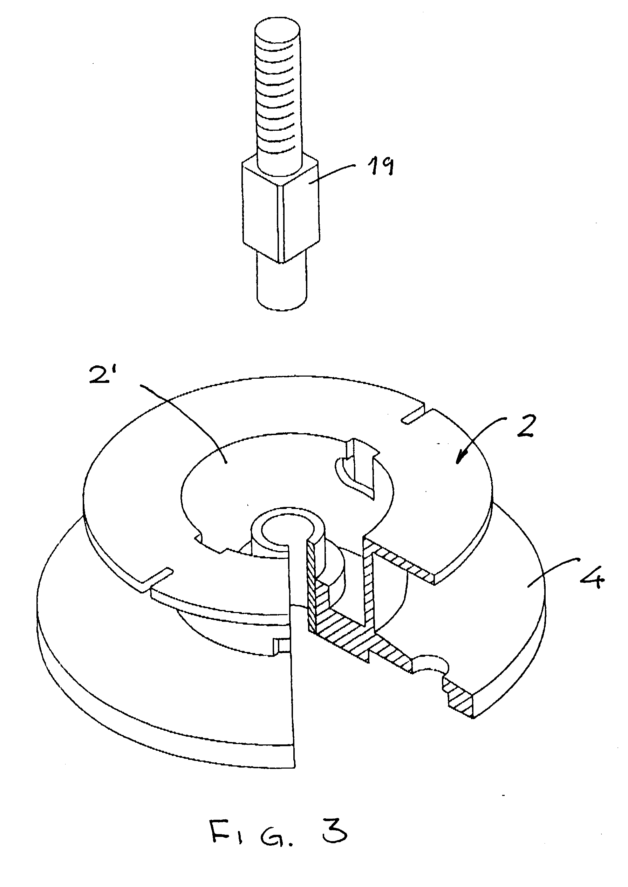

Turning first to **Figures 1** and **2**, the cutting head comprises a housing **1** and a spool **2** on which at least one flail is wound. As can be seen the spool is not entirely concealed within housing **1**, the outer wall **4** of the spool acts as a cover for housing **1** and is adapted to engage the ground when the mower is operated and when it is bumped on the ground to release a section of flail. Within space 2' of the spool there is provided a release mechanism which comprises a ring like shaped member **7** which is illustrated in detail in **Figure 2.** As can be seen, said ring member **7** is provided with an inner flange **8** having circumferential teeth like protrusions **9**. There are provided two sets of such protrusions on both sides of said flange **8**, the two sets being set-off one in relation to the other, so that one set is not in line with the second set.

Two identical members **25** provided with protrusions are placed within ring member **7**. There is further provided body **12** which passes through opening **6** in housing **1**. Said opening **6** corresponds with the cross section of body **12.**

Ring member **7** is further provided with two short pins **15** which are placed within complementary slots **16** provided in spool **2**. Helical spring **18** which applies pressure on housing **1** is provided.

Spring washer **17** is placed over body **12.**

Finally screw bolt **19** passes through body **12** arid is connected to the free end of drive shaft of the mower.

From the inner side of spool **2** extends centrally placed pin **5** which is inserted into bore **19'**provided in the "head" of screw bolt **19**.

Housing **1** is further provided with outlet holes **20** from which extend the flails **3**. In the known cutting heads the spool moves axially within the housing. Contrary to the known arrangement the spool **2** is fixedly held within housing **1** when the cutting head is bumped against the ground the spool and housing move axially relative to body **12**.

The release operation of a section of Hail occurs in the following manner. Shaft **12** rotates the whole cutting head, as opening **6** matches the cross section of shaft **12**. Spool **2** would rotate as pin **13** (the lower) is held in between the lower set of protrusions **9**. When the cutter head **4** is bumped against the ground the spool and housing would move axially against spring **18**, ring member **7** would also move axially thus pin **13** would be disengaged from protrusions **9**, consequently spool **2** would spin by inertia arid release a short predetermined length of flail. Pin **13** would enter in between upper protrusions **9** arid stop the inertial spin. Spring **18** would return housing **1** and the spool to the initial starting position.

Where technical features mentioned in any claim are followed by reference signs, those reference signs have been included for the sole purpose of increasing the intelligibility of the claims and accordingly, such reference signs do not have any limiting effect on the scope of each element identified by way of exile by such reference signs.

## Claims

1. A rotary mower cutting head which comprises a housing in which is mounted a spool on which is wound at least one flail, said spool is also a cover for said housing, said spool having an inner space adapted to accommodate a release mechanism which comprises a ring shaped member, as defined, there is further provided a helical spring placed intermediate said housing and a central shaft of a non-round cross section which is connected to said releasing mechanism, characterized thereby that all parts are connected by a screw bolt provided with a "head" of non round cross section and having a bore adapted to receive therein a protrusion extending from the inner side of said cover part.

2. A rotary mower cutting head as claimed in Claim 1, where the bumper part is an integral part of said spool.

3. A rotary mower cutting head as claimed in Claim 2, where said bumper part is substantially flat.

4. A rotary mower cutting head as claimed in Claim 1 where said release mechanism comprises a ring shaped member having an internal flange and two sets of teeth.

5. A rotary mower cutting head as claimed in Claim 1, where said release mechanism comprises two discs having longitudinal protrusions.

6. A rotary mower cutting head as claimed in Claim 1, where the cross section of said axis corresponds with the cross section of the inlet opening of said housing.

7. A rotary mower cutting head as claimed in Claim 1, where said helical spring is placed under said ring shaped member.

8. A rotary mower cutting head, substantially as hereinbefore described and reference to the accompanying drawings.
